# EUROPEAN PATENT APPLICATION

(11) **EP 2 101 502 A1**
(43) Date of publication of application: **16.09.2009**
(21) Application number: 09155172.1
(22) Date of filing: 13.03.2009
(51) Int. Cl.: H04N 7/24, H04N 5/00

(54) **Method and apparatus for receiving broadcasting signal**

(30) Priority: 13.03.2008 US 36456 P; 11.03.2009 KR 20090020771
(71) Applicant: LG Electronics Inc., Seoul 150-721 (KR)
(72) Inventor: Hong, Ho Taek, 137-130, SEOUL (KR); Kim, Jin Seok, 137-130, SEOUL (KR); Ahn, Kyu Tae, 137-130, SEOUL (KR)
(74) Representative: Cabinet Plasseraud

(57) **Abstract**

The present invention is directed to a method and apparatus for receiving a broadcasting signal. The method may include receiving a broadcasting signal according to a digital video broadcasting (DVB) system, demodulating (S110) the received broadcasting signal, demultiplexing (S120) the demodulated broadcasting signal and outputting service information describing the broadcasting signal and service streams, decoding (S130) the service information and obtaining (S140) an identifier for identifying one of a DVB-H broadcasting signal and a DVB-T broadcasting signal, and displaying (S150) one of the DVB-H broadcasting signal and the DVB-T broadcasting signal using the identifier.

## Description

### Field of the Invention

The present invention relates to a method and apparatus for receiving a broadcasting signal.

### Discussion of the Related Art

While digital broadcasting is activated, broadcasting signals are transmitted or received by various broadcasting systems. These broadcasting systems include, for example, broadcasting systems which utilize different modulation schemes and coding schemes in an upper layer while utilizing the same modulation scheme in a physical layer. For example, there is a system in which a mobile broadcasting signal utilizes the same modulation scheme as a terrestrial broadcasting signal in a physical layer, but the mobile broadcasting signal is transmitted together with the terrestrial broadcasting signal by additionally performing channel coding. If two broadcasting systems have similar signaling information, a broadcasting receiver may identify the respective broadcasting signals of the two broadcasting systems using the signaling information. However, although the broadcasting receiver identifies both the two broadcasting signals, an additional decoding module should be included in order to display the mobile broadcasting signal.

That is, although the broadcasting receiver which receives only the terrestrial broadcasting signal identifies the mobile broadcasting signal using the signaling information, the broadcasting receiver cannot decode the mobile broadcasting signal. Accordingly, although a user selects the identified mobile broadcasting service, the broadcasting receiver cannot provide the selected mobile broadcasting service to the user. Accordingly, in this case, since the broadcasting service which cannot be processed by the broadcasting receiver is identified, it may lead to confusion for the user.

### SUMMARY OF THE INVENTION

Accordingly, the present invention is directed to a method and apparatus for receiving a broadcasting signal that substantially obviates one or more problems due to limitations and disadvantages of the related art.

An object of the present invention is to provide a method and apparatus for receiving a broadcasting signal, which is capable of easily identifying the respective broadcasting signals of broadcasting systems using the same signaling information, which are subjected to the same modulation scheme in a physical layer.

Another object of the present invention is to provide a method and apparatus for receiving a broadcasting signal, which is capable of easily identifying a mobile broadcasting signal and a broadcasting signal for fixed reception.

Another object of the present invention is to provide a method and apparatus for receiving a broadcasting signal, which is capable of easily identifying a digital video broadcasting-handheld (DVB-H) broadcasting signal and a digital video broadcasting-terrestrial (DVB-T) broadcasting signal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve the object, one embodiment of the present invention discloses a method for receiving a broadcasting signal. The method includes receiving a broadcasting signal according to a digital video broadcasting (DVB) system, demodulating (S110) the received broadcasting signal, demultiplexing (S120) the demodulated broadcasting signal and outputting service information describing the broadcasting signal and service streams, decoding (S130) the service information and obtaining (S140) an identifier for identifying one of a DVB-H broadcasting signal and a DVB-T broadcasting signal, and displaying (S150) one of the DVB-H broadcasting signal and the DVB-T broadcasting signal using the identifier.

The identifier may be a time_slicing_identifier_descriptor() of a network information table (NIT), and when the time_slicing_identifier_descriptor() is included in the NIT, the service may be identified as a DVB-H service, and when the time_slicing_identifier_descriptor() is not included in the NIT, the service is identified as a DVB-T service.

The identifier may be a service type included in a service description table (SDT), and when the service type indicates mobile broadcasting, the service may be identified as the DVB-H service and, when the service type does not indicate mobile broadcasting, the service is identified as the DVB-T service.

The identifier may be a descriptor included in one of a network information table (NIT) and a service description table (SDT), and the descriptor may include information which directly describes that the service according to the broadcasting signal is a DVB-T service or a DVB-H service.

The identifier may be a descriptor included in a service description table (SDT), and when the descriptor does not include a service name, a service may be identified as a DVB-H service and, when the descriptor includes the service name, the service may be identified as a DVB-T service.

The identifier may be a service_descriptor included in a service description table (SDT), and when the service_descriptor is not included in the SDT, a service may be identified as a DVB-H service and, when the service_descriptor is included in the SDT, the service may be identified as a DVB-H service.

The identifier may be a service description table (SDT), and when the SDT is not included in the service information, a service may be identified as a DVB-H service and, when the SDT is included in the service information, the service may be identified as a DVB-T service.

The identifier is a program map table (PMT), and when the PMT includes one of an audio packet identifier (PID), a video PID and a program clock reference (PCR) PID, a service is identified as a DVB-T service and, when the PMT includes none of audio packet PID, a video PID and a PCR PID, the service may be identified as a DVB-H service.

In another aspect, one embodiment of the present invention discloses an apparatus for receiving a broadcasting signal. The apparatus includes a receiving unit configured to receive a broadcasting signal according to a digital video broadcasting (DVB) system and to demultiplex the received broadcasting signal to broadcasting streams, a service information decoder (140) configured to decode service information of the demultiplexed broadcasting streams and to obtain an identifier for identifying at least one of a DVB-handheld (H) broadcasting signal and a DVB-terrestrial (T) broadcasting signal, a manager (160) configured to generate and store a channel list according to the identifier, and a display unit configured to display one of a DVB-H broadcasting service and a DVB-T broadcasting service according to the identifier.

The identifier may be a time_slicing_identifier_descriptor() of a network information table (NIT), and when the service information decoder (140) decodes the time_slicing_identifier_descriptor() from the NIT, the manager (160) may identify the service as the DVB-H service.

The identifier may be a service type included in a service description table (SDT), and when the service type is a service type of mobile broadcasting, the manager (160) may identify the service according to the broadcasting streams as the DVB-H service.

The identifier may be a descriptor included in one of a network information table (NIT) and a service description table (SDT), and when the service information decoder (140) decodes the descriptor from one of the NIT and the SDT, the manager (160) may identify the service according to the broadcasting streams as the DVB-T service or the DVB-H service according to information which is directly described in the descriptor.

The identifier may be a descriptor included in a service description table (SDT), and when the service information decoder (140) decodes a service name from the descriptor, the manager (160) may identify the service according to the broadcasting streams as the DVB-H service.

The identifier may be a service_descriptor included in a service description table (SDT), and when the service information decoder (140) decodes the service_descriptor from the SDT, the manager (160) may identify the service according to the broadcasting streams as the DVB-H service.

The identifier is a service description table (SDT), and when the service information decoder (140) decodes the SDT, the manager (160) may identify the service according to the broadcasting streams as the DVB-T service.

The identifier may be a program map table (PMT), and when the service information decoder (140) decodes one of an audio packet identifier (PID), a video PID and a program clock reference (PCR) PID from the PMT, the manager (160) may identify the service according to the broadcasting streams as the DVB-T service.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view showing an example of a service program list or a service guide for displaying broadcasting channels;

FIGs. 2 and 3 show locations of carriers for transmitting the TPS in the OFDM symbols of DVB-T (2K and 8K modes) and DVB-H (4K mode) signals, respectively;

FIG. 4 shows a network information table (NIT) of the PSI/SI;

FIG. 5 shows the descriptor which may be included in the NIT;

FIG. 6 is a view showing a SDT of the PSI/SI;

FIG. 7 shows service_descriptor() included in the SDT;

FIG. 8 shows an example of a descriptor capable of identifying the DVB-H;

FIG. 9 is a view showing a program map table (PMT);

FIG. 10 is a flowchart illustrating a method for receiving a broadcasting signal according to an embodiment of the present invention; and

FIG. 11 is a view showing an apparatus for receiving a broadcasting signal according to an embodiment of the present invention.

### DETAILED DESCRIPTION OF THE INVENTION

Hereinafter, the embodiments capable of easily identifying the respective broadcasting signals of a plurality of broadcasting systems will be described. In order to easily describe the present invention, a DVB-T broadcasting signal and a DVB-H broadcasting signal are, for example, described. The respective broadcasting signals of a DVB-T2 system and a next generation handheld (NGH) system are applicable to the following embodiments. All these broadcasting systems utilize an orthogonal frequency division multiplexing (OFDM) scheme in a physical layer and utilize a service description table (SDT) defined by digital video broadcasting-service information (DVB-SI) as signaling information describing a service. A receiver for receiving a DVB-T broadcasting signal may also receive the DVB-SI which describes a DVB-H broadcasting signal. Accordingly, in the case where a broadcasting receiver generates a service list using the SDT, a service list of DVB-H broadcasting signals and a service list of DVB-T broadcasting signals are provided to a user without distinguishing between the signals. Since the DVB-H broadcasting signal is processed by a typical method such as time-slicing, forward error correction (FEC), a method of processing IP-based streams or the like, a DVB-T receiver cannot decode an audio/video signal of the DVB-H broadcasting signal. Accordingly, even when a DVB-H broadcasting channel is identified and displayed by the DVB-T receiver, a user cannot view any A/V signal via the DVB-H broadcasting channel.

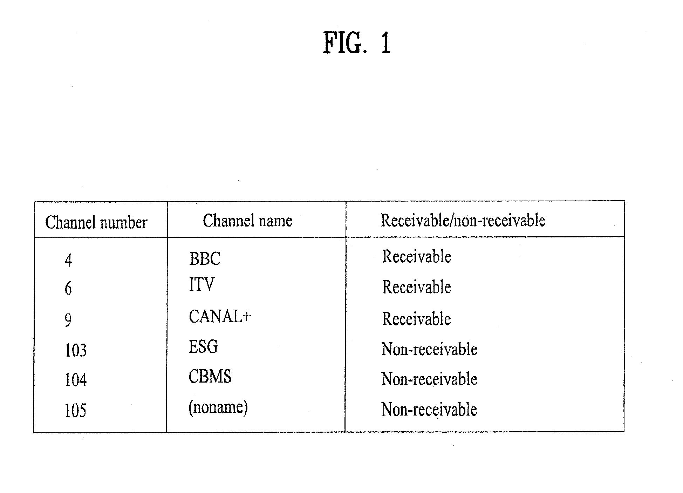

FIG. 1 is a view showing an example of a service program list or a service guide for displaying, for example, broadcasting channels.

A DVB-T broadcasting receiver can decode DVB-SI signaling information and obtain a service list of broadcasting signals. It is assumed that a channel 4 has a channel name "BBC", a channel 6 has a channel name "ITV", a channel 9 has a channel name "CANAL+", a channel 103 has a channel name "ESG", a channel 104 has a channel name "CBMS", and a channel 105 is noname.

In FIG. 1, the channels 4, 6 and 9 provide services identified by the SDT of the DVB-T broadcasting signals, and the A/V signals from these channels can be decoded. However, since the channels 103, 104 and 105 provide services identified by the SDT but are the DVB-H channels, these channels are non-receivable channels from which the A/V signals cannot be decoded. However, the broadcasting receiver can identify the DVB-H channel numbers and the DVB-T channel numbers and provide a channel list including channel numbers to a user. Accordingly, although the user selects the channels 103, 104 and 105 via the DVB-T broadcasting receiver, any video/audio signal cannot be obtained.

Hereinafter, an embodiment in which a broadcasting receiver is capable of identifying a DVB-T broadcasting signal and a DVB-H broadcasting signal will be described.

First, the broadcasting receiver may use transmission parameters of received signals in order to identify the DVB-T broadcasting signal and the DVB-H broadcasting signal. For example, when the DVB-T broadcasting receiver receives a broadcasting signal, a signal is locked with a specific frequency of the broadcasting signal. When a broadcasting signal transmitted with the frequency is present, the broadcasting receiver can obtain transmission parameter signaling (TPS) from the broadcasting signal tuned by a tuner. The TPS is transmitted by carriers of a specific location of OFDM symbol locations of the broadcasting signal.

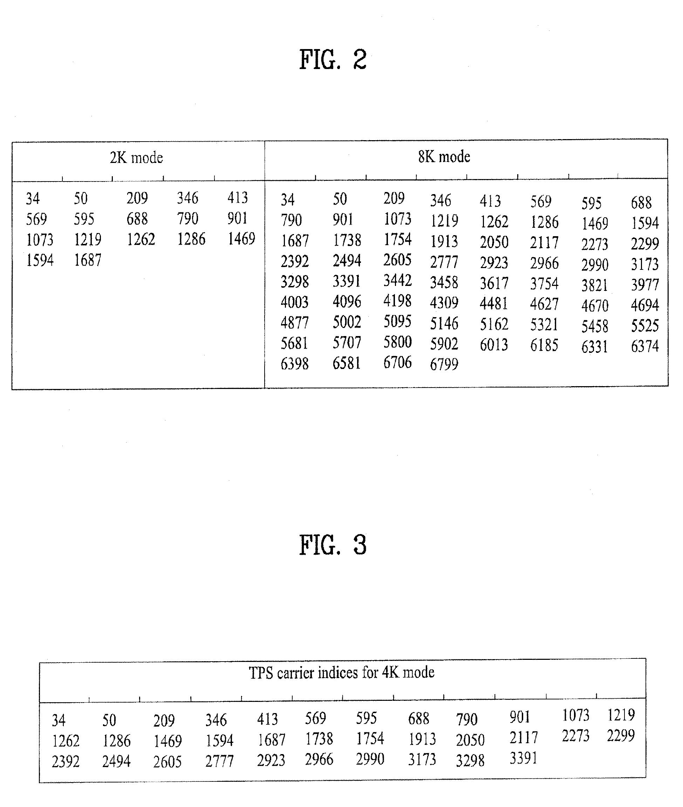

FIGs. 2 and 3 show locations of carriers for transmitting the TPS in the OFDM symbols of DVB-T (2K and 8K modes) and DVB-H (4K mode) signals, respectively.

The TPS is transmitted by the OFDM symbols, and the size of a TPS block corresponding to one OFDM frame is 68 bits. The 68 bits include one start bit, 16 synchronization bits, 37 information bits, and 14 redundancy bits. The DVB-T signal uses 31 bits of the 37 information bits and the remaining six bits are set to 0. But, the DVB-H signal uses 33 bits of the 37 information bits and the remaining four bits are set to 0. The DVB-H signal may be signaled by the number of information bits larger than that of the DVB-T signal by two bits. The TPS size of the DVB-T signal and the TPS size of the DVB-H signal are different from each other.

When the broadcasting receiver obtains the DVB-H/T broadcasting signal from a specific frequency, the transmission parameter signaling information size (TPS information size) can be obtained. For example, among the managers of the broadcasting receiver, a manager (application manager) may analyze the TPS information size and identify the DVB-H channel or the DVB-T channel. In addition, the manager may divide the identified DVB-H channel or DVB-T channel, and generate a channel list using the broadcasting channels capable of providing services. The details will be described later.

The disclosed method may be a method of identifying two broadcasting signals when the DVB-T broadcasting signal and the DVB-H broadcasting signal are transmitted via different channels. However, in the case where the DVB-T broadcasting signal and the DVB-H broadcasting signal are transmitted via one channel, an additional checking process may be necessary.

Hereinafter, an embodiment in which the broadcasting signal is identified using signaling information of a broadcasting signal will be described. The signaling information of a DVB system is called program specific information/system information (PSI/SI) and, for convenience of description, is herein called service information (SI).

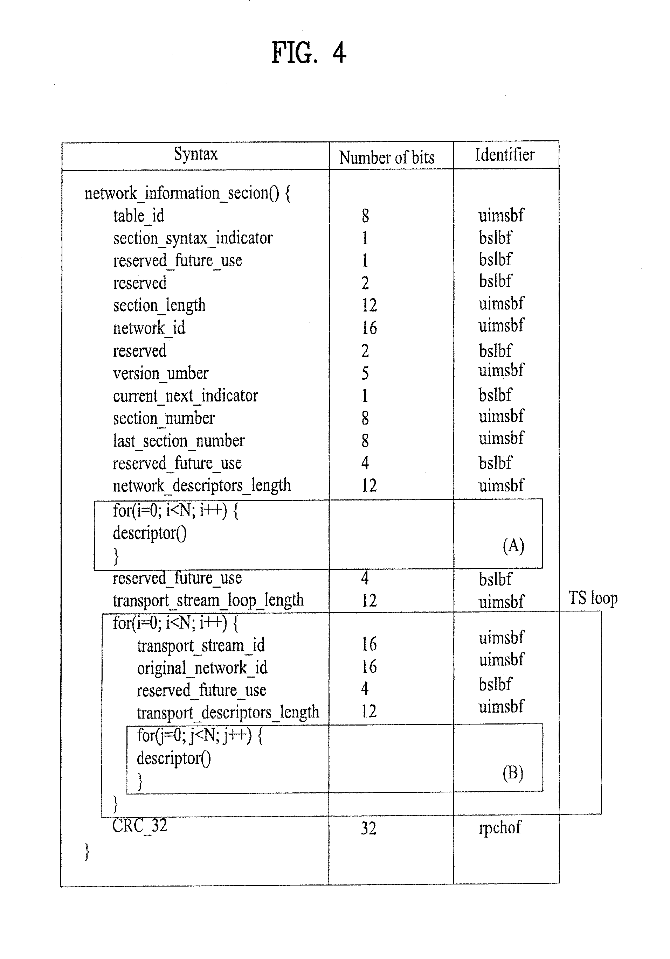

FIG. 4 shows a network information table (NIT) of the PSI/SI. The NIT includes transport stream (TS) information transmitted over a network. The fields of the NIT are as follows.

A table_id field indicates an identifier capable of identifying the NIT. A section_syntax_indicator field may be set to 1 where the field may indicate that the section is MPEG long-form. A reserved_future_use field and a reserved field indicate reserved regions which may be set to, for example, 1 and 11, respectively. A section_length field indicates the length of a section.

A network_id field indicates an identifier for identifying a delivery system for transmitting service streams, and may include, for example, an identifier of a broadcasting transmitter.

A version_number field indicates the version number of a table section. A current_next_indicator field indicates whether currently delivered information is applied to a current section or a next section.

A section_number field indicates the serial number of a table section.

A last_section_number field indicates the number of a last table section.

A reserved_future_use field indicates a reserved region, and a network_descriptors_length field indicates the length of a network descriptor loop A included in the following. This descriptor loop may include information capable of describing all networks.

After the reserved_future_use field indicating reserved region, a transport_stream_loop_length field indicates the length of the following TS loop.

In this drawing, the TS loop indicates a loop including information describing the TS. A transport_stream_id field indicates a TS identifier for distinguishing a TS of a current delivery system from another TS of the delivery system.

An original_network_id indicates a network identifier of an original delivery system. After the reserved_future_use field indicating the reserved region, a descriptor B describing a TS according to a TS identifier and a field indicating the length of the descriptor are included.

In this example, the TS descriptor B may include information describing the TS.

The NIT may include the network descriptor A describing information about all networks and the TS descriptor B describing the TSs of the networks. The descriptor capable of identifying the DVB-T broadcasting signal and the DVB-H broadcasting signal may be included at the two descriptor locations.

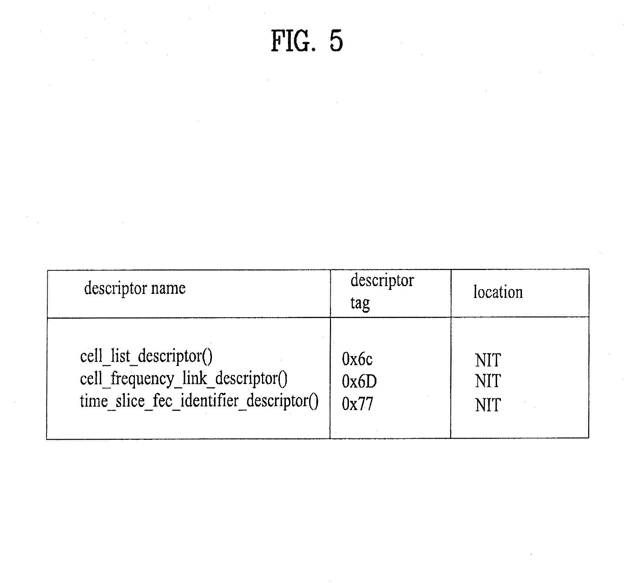

FIG. 5 shows the descriptor which may be included in the NIT.

For example, the NIT may include cell_list_descriptor() having a descriptor tag value of 0x6c, cell_frequency_link_descriptor() having a descriptor tag value of 0x6D and time_slice_fec_identifier_descriptor() having a descriptor tag value of 0x77. Among them, the cell_list_descriptor() and the cell_frequency_link_descriptor() include information about handover and roaming.

The time_slice_fec_identifier_descriptor() may include a time slicing parameter such as a FEC scheme used for time slicing. Since the time slicing is used only in the DVB-H signal, the DVB-T and the DVB-H can be identified using this descriptor.

For example, in the case where the time_slice_fec_identifier_descriptor() is included in the network descriptor A of FIG. 4, since the network (that is, all TSs transmitted over the network) transmits the DVB-H service, the service transmitted over this network can be identified as the DVB-H service.

In the case where the time_slice_fec_identifier_descriptor() is included in the TS descriptor B of FIG. 4, the TS can be identified as the transport stream for transmitting the DVB-H service.

A broadcasting signal of a specific channel is selected by a tuner and is then demodulated by a demodulator. The SI of the demodulated broadcasting signal is delivered to a SI decoder through a demultiplexer. The SI decoder may identify whether or not the time_slice_fec_identifier_descriptor() is included in the SI from the NIT. Accordingly, the SI decoder may deliver information indicating whether or not the time_slice_fec_identifier_descriptor() is present to the manager. The manager may manages the DVB-H or DVB-T channel list depending on whether or not the time_slice_fec_identifier_descriptor() is present.

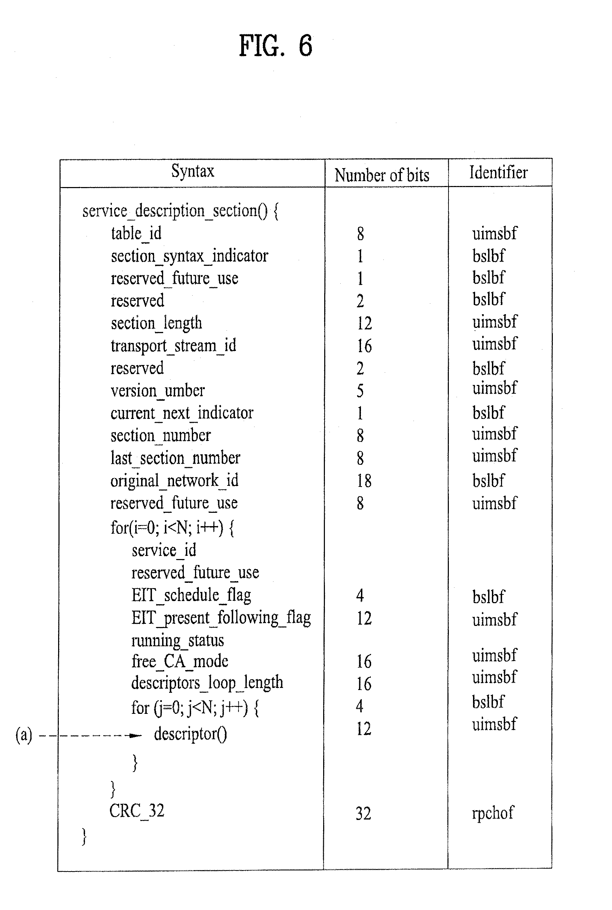

FIG. 6 is a view showing a SDT of the PSI/SI.

A table_id field indicates an identifier capable of identifying the SDT. A section_syntax_indicator field may be set to 1 where it may indicate that the section is MPEG long-form. A reserved_future_use field and a reserved field indicate reserved regions which may be set to, for example, '1' and '11', respectively. A section_length field indicates the length of a section.

A transport_stream_id field indicates a TS identifier, and a reserved filed indicates a 2-bit reserved region.

A version_number field indicates the version number of a table section. A current_next_indicator field indicates whether delivered information is applied to a current section or a next section.

A section_number field indicates the serial number of a table section.

A last_section_number field indicates the number of a last table section. An original_network_id indicates a network identifier of an original delivery system. A reserved_future_use field indicates a reserved region.

A service_id indicates the identifier of a service delivered by the TS. After a 6-bit reserved_future_use field, an EIT_schedule_flag is set to 1 if EIT schedule information of the service is present in the identified TS and is set to 0 if so not.

An EIT_present_following_flag field is set to 1 if current and next schedule information of the service is present in the identified TS and is set to 0 if so not.

A running_status field indicates the status of the described service, in which "undefined", "not running", "starts in a few seconds", "pausing" and "running" may be set.

A free_CA_mode field indicates whether or not all component streams of the described service are scrambled.

In order to describe the services again in detail, the field indicating the length of the service loop (descriptor_loop_length) and the service loop are included.

The service loop includes a descriptor describing the services in detail and the service loop may include a descriptor which can describe supplementary information of the identified service.

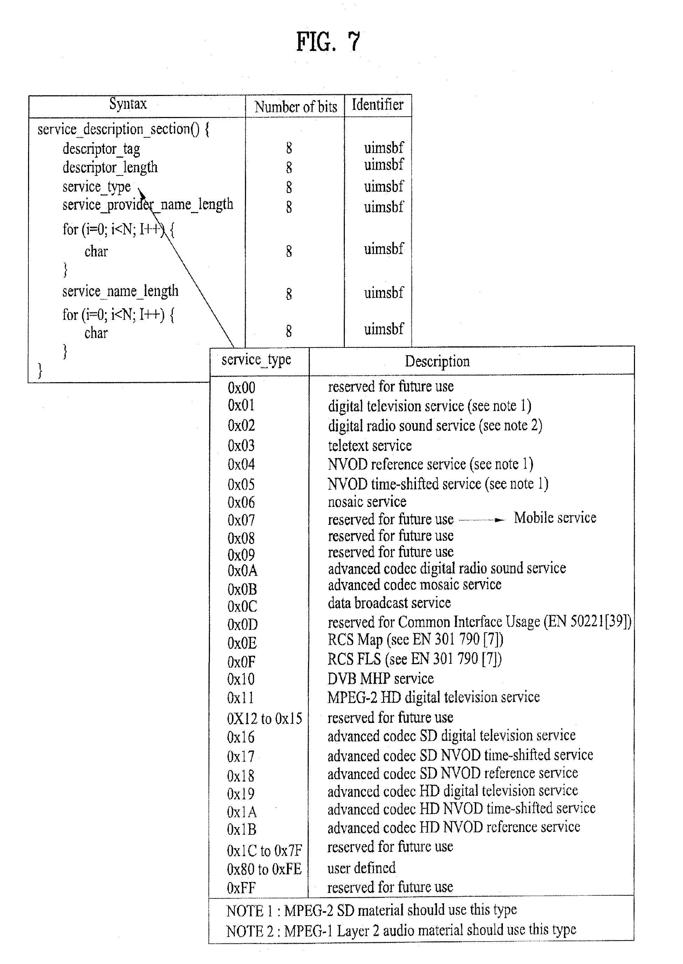

FIG. 7 shows the service_descriptor() included in the SDT. The service_descriptor() may describe the services.

A descriptor_tag indicates the identifier of the service_descriptor(), and a descriptor_length indicates the length of the descriptor.

A service_type indicates the type of the described service, and the detailed service type is shown on the right side of FIG. 7. For example, if the service_type is 0x01, it is indicated that the service is a digital television service and, if the service_type is 0x02, it is indicated that the service is a digital radio service. If the service_type is 0x03, it is indicated that the service is a teletext service.

In addition, a service provider name length (service_provider_name_length) and the name thereof, and a service name length (service_name_length) and information about the length thereof are transmitted by the service_descriptor().

Although the conventional service_type does not have a service type value of mobile broadcasting, since the mobile broadcasting delivers a video signal with quarter video graphics array (QVGA) resolution lower than SD resolution, it is preferable that the mobile broadcasting has a separate service_type.

In this embodiment, if the service_type is 0x07, it is indicated that the service type is the mobile broadcasting is indicated and the service type is the DVB-H service.

The broadcasting receiver may decode the SDT of the PSI/SI of the demultiplexed broadcasting stream. The SI decoder of the broadcasting receiver may decode the service type value of the mobile broadcasting by the service_type of the service_descriptor() of the SDT and deliver the decoded service type value to the channel manager.

The manager may identify whether the service is the DVB-T service (service type = 0x01 (SD) or 0x12(HD)) or the DVB-H service (service type = 0x07 in this embodiment) by the service_type value. The detailed description thereof will be made later.

As another example, a descriptor for identifying the DVB-H service may be included in the SDT. As described above, a descriptor() describing the supplementary information of the service may be included in the service loop of the SDT.

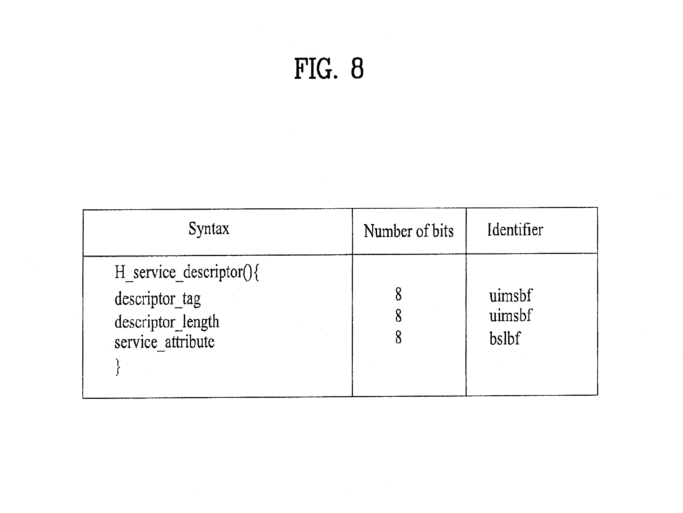

FIG. 8 shows a descriptor capable of identifying the DVB-H, which, for convenience, is called H_service_descriptor(). The H_service_descriptor() may include a descriptor_tag which is the identifier of the descriptor and a descriptor_length which is the length of the descriptor. The H_service_descriptor() may include a service attribute, which may indicate whether or not the service is the DVB-H service.

The SI decoder of the broadcasting receiver decodes the SDT of the PSI/SI of the demultiplexed broadcasting streams, decodes the service_descriptor() of the SDT, and delivers the above information to the channel manager.

At this time, the manager may identify the DVB-H signal and the DVB-T signal if the H_service_descriptor() is included in the SDT or if the service attribute indicates the DVB-H service in the H_service_descriptor().

As another embodiment, if the service name is included in the service_descriptor() of the SDT, the service is identified as the DVB-T service and, if so not, the service is identified as the DVB-H service. As another example, if the service_descriptor() is not included in the SDT or is optional, the service is identified as the DVB-H service. As another example, if the SDT is not transmitted in the broadcasting signal, the service by the broadcasting signal is identified as the DVB-H service.

Alternatively, if the H_service_descriptor() is included in the TS descriptor or the network descriptor of the NIT, it is indicated that the network or the TS delivers the DVB-H service.

As another example, the DVB-T service and the DVB-H service can be identified by a packet identifier (PID) of the broadcasting signal. Since the DVB-H service transmits audio and video signals by a multiprotocol encapsulation (MPE) scheme of data broadcasting, an audio PID, a video PID and a program clock reference (PCR) PID are not used. Accordingly, the broadcasting receiver can identify the DVB-H signal and the DVB-T signal using the audio PID, the video PID and the PCR PID.

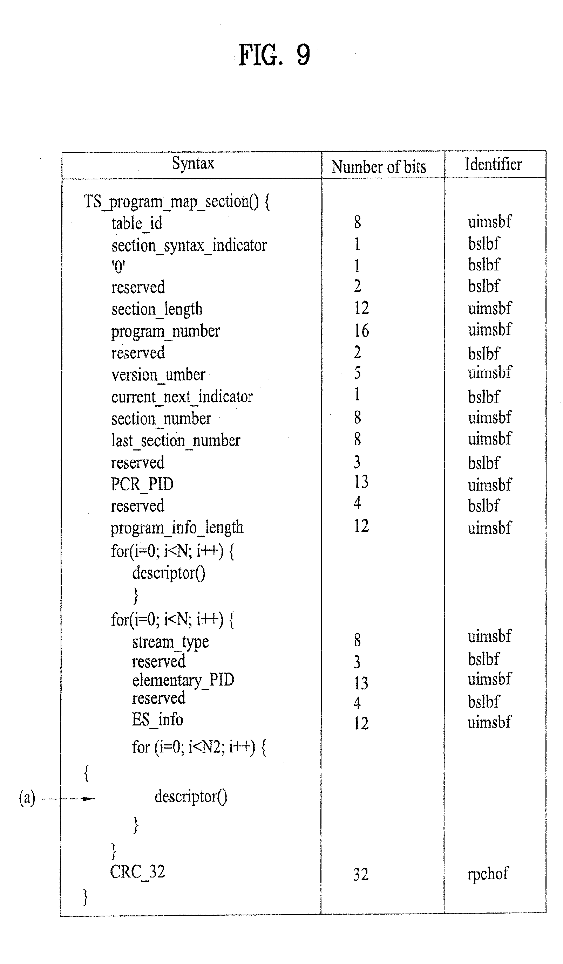

FIG. 9 is a view showing a program map table (PMT). The PMT represents a mapping relationship between program numbers and elementary streams. Hereinafter, the PMT will be described.

A table_id field indicates an identifier capable of identifying the PMT. A section_syntax_indicator field may be set to 1 and may indicate MPEG long-form. After a field which is set to 0, a 2-bit reserved region may be set.

A section_length field indicates the length of a section. A program_number field indicates a program number, which corresponds to the program number of a program association table (PAT).

After the 2-bit reserved field, a version_number field indicates the version number of a table section. A current_next_indicator field indicates whether or not the following information is applied to a current section.

A section_number field indicates the serial number of a table section. A last_section_number field indicates the number of a last section.

A PCR_PID field indicates the PID of TS packet for delivering the PCR of a program. A program_info_length indicates the length of the following program information. In addition, a descriptor describing the program is included.

A stream_type includes information for identifying the type of the elementary stream, and an elementary_PID includes PID information of the TS packet for transmitting the elementary stream.

An ES_info_length indicates the length of the following ES information. In addition, a descriptor describing the ES is included.

If any one of the audio stream PID, the video stream PID and the PCR type transmission PID is included in the PMT, the broadcasting receiver identifies the streams corresponding thereto as the DVB-T broadcasting signal and, if so not, the broadcasting receiver identifies the streams as the DVB-H broadcasting signal.

This embodiment relates to a method of identifying two broadcasting signals if the identifiers of the DVB-H signal and the DVB-T signal are not included in the SI such as the NIT or the SDT.

The broadcasting receiver may decode the PMT of the PSI/SI of the demultiplexed broadcasting streams. If any one of the audio stream PID, the video stream PID and the PCR type transmission PID is present in the PMT, the SI decoder of the broadcasting receiver informs the manager of it. The manager determines that the received broadcasting signal of the channel is the DVB-T broadcasting signal. If the SI decoder informs the manager that any one of the audio stream PID, the video stream PID and the PCR type transmission PID is not present in the PMT, the manager identifies the broadcasting channel as the DVB-H broadcasting channel.

For example, the DVB-T service and the DVB-H service can be identified as the information of the descriptor a included in a second descriptor loop of the PMT. If the audio PID, the video PID or the PCR PID is included in this descriptor, it is determined that the DVB-T service is provided. If this descriptor includes the data broadcasting identifier for Digital Storage Media Command and Control (DSM-CC) OAD/OTA, it may be determined that an OTA/OAD service is provided. If this descriptor includes a data broadcasting identifier for MHEG/MHP object/carousel, it may be determined that an MHEG/MHP data service is delivered via the received broadcasting signal. If a CAS identifier is present, it is determined that a CAS scrambled service is present.

In addition, if this descriptor includes a DSMCC stream identifier for an MPE type, it may be determined that the DVB-H service is delivered via a broadcasting signal.

Accordingly, the SI decoder may decode information capable of identifying the DVB-H service and the DVB-T service and deliver this identifier to the manager.

The channel manager in the manager may store a channel list of identified DVB-H or DVB-T channels and display the service of the identified DVB-H or DVB-T channel according to the control of the user.

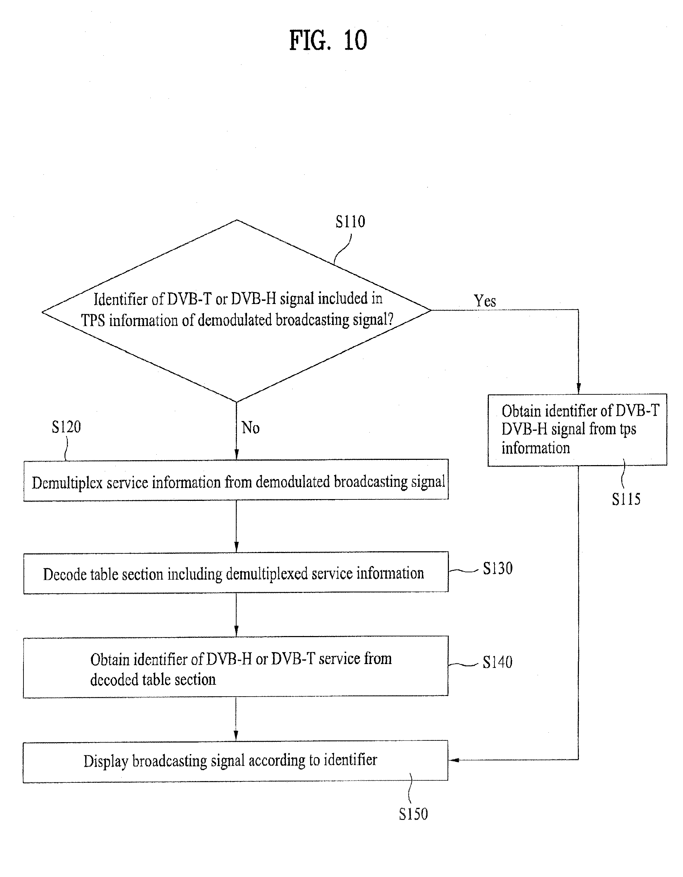

FIG. 10 is a flowchart illustrating a method for receiving a broadcasting signal according to an embodiment of the present invention.

A received broadcasting signal is demodulated, and it is checked whether an identifier of a DVB-T or DVB-H signal is included in transmission parameter signaling information of the demodulated broadcasting signal (S110).

If the identifier of the DVB-T or DVB-H signal is included (yes, S110), the identifier is obtained, and it is checked whether the received signal is the DVB-T or the DVB-H signal from the identifier (S115).

Then, the received broadcasting signal is decoded according to the identifier and a broadcasting signal is displayed (S150).

If the identifier of the DVB-T or DVB-H signal is not included in the received broadcasting signal (no, S110), SI is demultiplexed from the demodulated broadcasting signal (S120).

A table section including the demultiplexed SI is decoded (S130).

The identifier of any one of the DVB-H and DVB-T service is obtained from the decoded table section, and it is checked whether the received signal is the DVB-T or DVB-H signal according to the identifier (S140).

For example, a descriptor capable of identifying the DVB-H service and the DVB-T service may be included in the NIT. That is, the time_slicing_identifier_descriptor() may be included in the network loop or the TS loop in the NIT. The network or TS which includes this descriptor in the NIT provides the DVB-H service, and the network or TS which does not include this descriptor provides the DVB-T service. Alternatively, the descriptor including the identifier of the DVB-H service or the DVB-T service may be included.

As another example, a descriptor capable of identifying the DVB-H service and the DVB-T service may be included in the SDT. The SDT may include the service_descriptor, which may include stream type information of the described stream. This stream type may be the stream type indicating a mobile service and, in this case, this service is identified as the DVB-H service.

Alternatively, if the service_descriptor is not present in the SDT, the service is identified as the DVB-H service, and if the service_descriptor is present in the SDT, the service is identified as the DVB-T service.

As another example, the two services can be identified by the service name of the service_descriptor. For example, since the service name is not included in the service_descriptor in case of the DVB-T service, the service is identified as the DVB-T service if the service name is present and the service is identified as the DVB-H service if the service name is not present.

As another example, since the SDT is not included in the DVB-H broadcasting signal, the two services can be identified depending on whether or not the SDT is included.

Alternatively, the two services can be identified depending on whether or not a descriptor describing the DVB-H service is included in the NIT or the SDT. As such an example, the descriptor called the H_descriptor() is described.

As another example, a service in which any one of the audio, video and PCR PIDs is described in the PMT can be identified as the DVB-T service and a service in which any PID of the PIDS is not included is identified as the DVB-H service.

A service carried by the received broadcasting signal is provided (displayed) according to the identifier (S150).

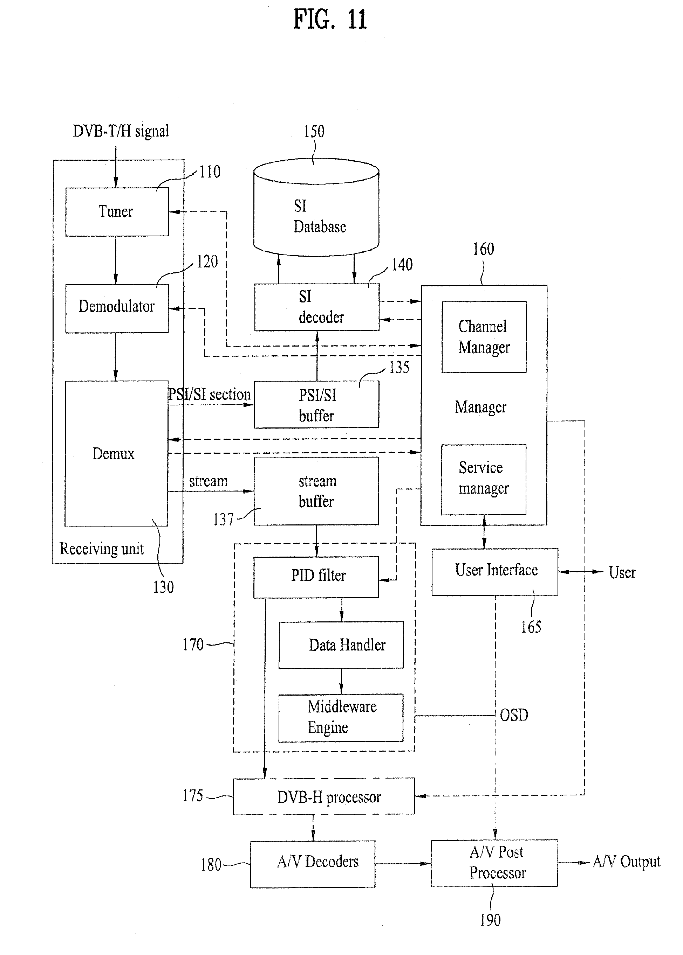

FIG. 11 is a view showing an apparatus for receiving a broadcasting signal according to an embodiment of the present invention.

The apparatus for receiving the broadcasting signal includes a tuner 110, a demodulator 120, a demultiplexer 130, a SI buffer 135, a stream buffer 137, a SI decoder 140, a SI database 150, a manager 160, an interface 165, a data processor 170, a DVB-H processor 175, a decoder 180, and a postprocessor 190.

The tuner 110, the demodulator 120 and the demultiplexer 130 may be called a receiving unit. The data processor 170, the DVB-H processor 175, the decoder 180, and the postprocessor 190 may be called an output unit.

The tuner 110 may tune to a specific RF channel signal of a received signal. The demodulator 120 may demodulate the specific RF signal and outputs the demodulated signal, and the demultiplexer 130 may demultiplex the demodulated signal to SI and audio/video streams.

The demodulator 120 may deliver physical layer information such as transmission parameter signaling to the manager 160. For example, the size of the TPS information of the DVB signal may become information for identifying the DVB-T signal and the DVB-H signal. The demodulator 120 may deliver the size of the TPS to the manager 160.

The SI buffer 135 may temporarily store the SI output from the demultiplexer 120.

The SI decoder 140 reads and decodes the SI stored in the SI buffer 135 and obtains information for identifying the DVB-T stream and the DVB-H stream from the decoded SI. For example, the SI decoder 140 may decode the information capable of identifying the DVB-H stream and the DVB-T stream from the SI such as the NIT, SDT, PMT or the like.

The SI decoder 140 stores the decoded SI in the SI database 150 and outputs the information for identifying the two broadcasting signals to the manager 160.

The stream buffer 137 temporarily stores the streams demultiplexed by the demultiplexer 130.

The data processor 170 may process the streams stored in the stream buffer 137, and may include a PID filter, a data handler and a middleware engine.

The PID filter of the data processor 170 filters the transport packets of the streams stored in the stream buffer 137. The PID filter of the data processor 170 outputs data broadcasting packets to the data handler and outputs A/V packets to the decoder 180. In this case, the data processor 170 may refer to the SI decoded by the SI decoder 140. The data processor 170 outputs the DVB-H service packets to the DVB-H processor 175 by referring to the SI or the transmission parameter, and the DVB-T signal bypasses the DVB-H processor 175 and is output to the decoder 180.

The data handler processes data broadcasting data and transmits the processed data to the middleware engine. The middleware engine drives middleware such that the data broadcasting is provided using the data output from the data handler, and provides a driving environment in which an application can be driven. The manager 160 may receive a source for the data broadcasting from the middleware engine and drive the application for implementing the data broadcasting.

The DVB-H processor 175 may receive a control signal according to the identifier of the DVB-T or DVB-H stream from the manager 160 and decode the DVB-H stream of the broadcasting signal according to the control signal. The DVB-H processor 175 may receive from the manager 160 a control signal indicating whether 160 or not the input stream is the DVB-H stream, and decode the DVB-H stream according to the control signal. The identifiers of the DVB-H and the DVB-T signal will be described in detail later.

If the input signal is the DVB-H signal, the DVB-H processor 175 may parse packets including the A/V signal using an MPE parser. The DVB-H processor 175 may perform UDP and IP decapsulation and output A/V data included in the IP packets and the UDP packets.

The user interface 165 may receive a user control signal and display the user control signal on an on screen display (OSD) or output the user control signal to the manager 160.

The decoder 180 may decode the A/V data identified by the data processor 170.

The postprocessor 190 may postprocess the decoded A/V data and output the postprocessed data to the display or the audio output unit.

The manager 160 may include a channel manager for controlling a channel and a service manager for controlling the provision of a service.

First, the service manager may drive the application of the broadcasting receiver and receive data necessary for driving the application from the middleware engine. The service manager may receive the user control signal from the user interface and drive the application capable of providing a service corresponding thereto. The channel manager may generate a channel map and generate and manage at least one of a DVB-H channel list and a DVB-T channel list of the received signal.

The manager 160 may obtain the identifier capable of identifying the DVB-H channel or the DVB-T channel from the demodulator 120 or the SI decoder 140.

For example, the manager 160 may obtain the TPS size from the demodulator 120 and identify the DVB-H channel or the DVB-T channel. The manager 160 may identify the service as the DVB-T service if the TPS information size is 31 bits and identify the service as the DVB-H service if the TPS information size is 33 bits. The channel manager may generate and store the identified DVB-H channel or DVB-T channel as the service list.

Alternatively, when the SI decoder 140 decodes the time_slice_fec_identifier_descriptor() from the NIT, the manager 160 receives the decoded information and identifies the service as the DVB-H service using the information. The manager may generate the DVB-H or the DVB-T service list according to the channels.

Alternatively, the manager 160 may identify the DVB-T service and the DVB-H service from the SDT decoded by the SI decoder 140. The manager 160 may receive the service_type value of the service_descriptor() of the SDI from the SI decoder 140. Then, the manager 160 may identify the mobile broadcasting service from the service_type decoded from the SDT, identify the DVB-H signal, and generate and store the channel list of the mobile broadcasting.

For example, the manager 160 may identify whether the service is the DVB-T service (service type = 0x01 (SD) or 0x12 (HD)) or the DVB-H service (service type = 0x07, in the above embodiment) by the service_type value.

Alternatively, the manager 160 may identify the DVB-H/T service by the service_descriptor of the SDT or the service name in the service_descriptor from the SI decoder 140. When the SI decoder 140 decodes the service_name from the service_descriptor, the manager 160 identifies the service as the DVB-T service.

When the SI decoder 140 cannot decode the service_descriptor or cannot decode the service_name from the service_descriptor, the manager 160 may identify the service as the DVB-H service.

Alternatively, when the SI decoder 140 decodes the H_service_descriptor() from the NIT or the SDT, the manager 160 may identify the DVB-H signal and the DVB-T signal. The manager 160 may identify the service as the DVB-H service if the H_service_descriptor() is included in the NIT or the SDT and identify the service as the DVB-T service if the H_service_descriptor() is not included in the NIT or the SDT.

The manager 160 may identify the channel as the DVB-T service if the SI decoder 140 parses any one of the audio stream PID, the video stream PID and the PCR PID from the PMT and identify the channel as the DVB-H service if the PID is not parsed.

As described above, according to the embodiments of the present invention, it is possible to identify the DVB-T and DVB-H service in various layers. According to the embodiments of the present invention, it is possible to accurately distinguish between channels for the services in a DVB-T/H integrated receiver.

According to the embodiments of the present invention, it is possible to easily identify the respective broadcasting signals of broadcasting systems using the same signaling information, which are subjected to the same modulation scheme in a physical layer.

According to the embodiments of the present invention, it is possible to provide a method and apparatus for receiving broadcasting signals, which is capable of easily identifying a mobile broadcasting signal and a broadcasting signal for fixed reception and easily identifying a DVB-H broadcasting signal and a DVB-T broadcasting signal.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

## Claims

1. A method for receiving a broadcasting signal, the method comprising:
receiving a broadcasting signal according to a digital video broadcasting (DVB) system;
demodulating (S110) the received broadcasting signal;
demultiplexing (S120) the demodulated broadcasting signal and outputting service information describing the broadcasting signal and service streams;
decoding (S130) the service information and obtaining (S140) an identifier for identifying one of a DVB-H broadcasting signal and a DVB-T broadcasting signal; and
displaying (S150) one of the DVB-H broadcasting signal and the DVB-T broadcasting signal using the identifier.

2. The method according to claim 1, wherein the identifier is a time_slicing_identifier_descriptor() of a network information table (NIT), and when the time_slicing_identifier_descriptor() is included in the NIT, the service is identified as a DVB-H service, and when the time_slicing_identifier_descriptor() is not included in the NIT, the service is identified as a DVB-T service.

3. The method according to claim 1, wherein the identifier is a service type included in a service description table (SDT), and when the service type indicates mobile broadcasting, the service is identified as the DVB-H service and, when the service type does not indicate mobile broadcasting, the service is identified as the DVB-T service.

4. The method according to claim 1, wherein the identifier is a descriptor included in one of a network information table (NIT) and a service description table (SDT), and the descriptor includes information which directly describes that the service according to the broadcasting signal is a DVB-T service or a DVB-H service.

5. The method according to claim 1, wherein the identifier is a descriptor included in a service description table (SDT), and when the descriptor does not include a service name, a service is identified as a DVB-H service and, when the descriptor includes the service name, the service is identified as a DVB-T service.

6. The method according to claim 1, wherein the identifier is a service_descriptor included in a service description table (SDT), and when the service_descriptor is not included in the SDT, a service is identified as a DVB-H service and, when the service_descriptor is included in the SDT, the service is identified as a DVB-H service.

7. The method according to claim 1 , wherein the identifier is a service description table (SDT), and when the SDT is not included in the service information, a service is identified as a DVB-H service and, when the SDT is included in the service information, the service is identified as a DVB-T service.

8. The method according to claim 1, wherein the identifier is a program map table (PMT), and when the PMT includes one of an audio packet identifier (PID), a video PID and a program clock reference (PCR) PID, a service is identified as a DVB-T service and, when the PMT includes none of audio packet PID, a video PID and a PCR PID, the service is identified as a DVB-H service.

9. An apparatus for receiving a broadcasting signal, the apparatus comprising:
a receiving unit configured to receive a broadcasting signal according to a digital video broadcasting (DVB) system and to demultiplex the received broadcasting signal to broadcasting streams;
a service information decoder (140) configured to decode service information of the demultiplexed broadcasting streams and to obtain an identifier for identifying at least one of a DVB-handheld (H) broadcasting signal and a DVB-terrestrial (T) broadcasting signal;
a manager (160) configured to generate and store a channel list according to the identifier; and
a display unit configured to display one of a DVB-H broadcasting service and a DVB-T broadcasting service according to the identifier.

10. The apparatus according to claim 9, wherein the identifier is a time_slicing_identifier_descriptor() of a network information table (NIT), and when the service information decoder (140) decodes the time_slicing_identifier_descriptor() from the NIT, the manager (160) identifies the service as the DVB-H service.

11. The apparatus according to claim 9, wherein the identifier is a service type included in a service description table (SDT), and when the service type is a service type of mobile broadcasting, the manager (160) identifies the service according to the broadcasting streams as the DVB-H service.

12. The apparatus according to claim 9, wherein the identifier is a descriptor included in one of a network information table (NIT) and a service description table (SDT), and when the service information decoder (140) decodes the descriptor from one of the NIT and the SDT, the manager (160) identifies the service according to the broadcasting streams as the DVB-T service or the DVB-H service according to information which is directly described in the descriptor.

13. The apparatus according to claim 9, wherein the identifier is a descriptor included in a service description table (SDT), and when the service information decoder (140) decodes a service name from the descriptor, the manager (160) identifies the service according to the broadcasting streams as the DVB-H service.

14. The apparatus according to claim 9, wherein the identifier is a service_descriptor included in a service description table (SDT), and when the service information decoder (140) decodes the service_descriptor from the SDT, the manager (160) identifies the service according to the broadcasting streams as the DVB-H service.

15. The apparatus according to claim 9, wherein the identifier is a service description table (SDT), and when the service information decoder (140) decodes the SDT, the manager (160) identifies the service according to the broadcasting streams as the DVB-T service.
